# EUROPEAN PATENT SPECIFICATION

(11) **EP 3 367 190 B1**
(45) Date of publication and mention of the grant of the patent: **05.10.2022**
(21) Application number: 18158217.2
(22) Date of filing: 22.02.2018
(51) Int. Cl.: G05B 19/401

(54) **WORK METHOD FOR A CARTESIAN MACHINE TOOL**
ARBEITSVERFAHREN FÜR EINE KARTESISCHE WERKZEUGMASCHINE
PROCÉDÉ DE TRAVAIL POUR UNE MACHINE-OUTIL CARTÉSIENNE

(30) Priority: 24.02.2017 IT 201700020977
(43) Date of publication of application: 29.08.2018
(73) Proprietor: HPT Sinergy S.r.l., 35131 Padova (IT)
(72) Inventor: PICCOLO, Gabriele, 35012 CAMPOSAMPIERO PD (IT)
(74) Representative: Maroscia, Antonio

(56) References cited:
- EP-A2- 0 737 844
- US-A- 5 444 640
- US-A1- 2008 195 343

## Description

### Technical Field

The present invention relates to a work method for a Cartesian machine tool.

A generic machine tool commonly operates according to a process, which here is described in general and independently of the nature of the workpiece, of its machining status or of the operations, e.g. milling, roughing, perforation, and the like, to be carried out on it, and which comprises the following steps:
- switching on the machine tool: obviously the first action in any operating cycle is switching on the machine tool;
- warm-up and self-diagnosis: once switched on, the machine carries out a series of operations adapted to bring it up to rated conditions and to check its status;
- mounting on retainers of a workpiece: a workpiece to be machined is installed in the work area of the machine; the mounting on retainers can be done manually or automatically;
- determining the "zeroes" of the workpiece being machined: once the workpiece is mounted on retainers, a point is inserted into the numerical control of the machine which will be the reference for the subsequent machining operations. The steps described up to here can be omitted if machining and/or re-machining operations are carried out on a workpiece that is already fixed, therefore already mounted on retainers, and/or with the machine already operational, i.e. with the warm-up already carried out;
- starting machining: in this step the machine starts any machining cycle, with all the operations specified by the program in use: millings, roughings, perforations and the like;
- carrying out a machining cycle: this step of the process is the one where the roughing machining effectively occurs, in which great quantities of material are removed and in which the machining tolerances are necessarily larger; this step also includes the pre-finishing machining, which makes it possible to have a known quantity of material, the "stock allowance", which must then be detected by the subsequent step of measuring the workpiece prior to finishing.
- measuring the workpiece prior to finishing: once the roughing machining and pre-finishing operations indicated in the previous step have concluded, the workpiece is measured for the purposes of finishing machining; such measurements are carried out using a measurement probe mounted on the working head;
- carrying out a finishing cycle: on the basis of the measurement carried out in the previous step, the finishing machining operations to bring the workpiece to the final dimensions and tolerances are carried out;
- measuring the finished workpiece: once the machining operations are ended, the workpiece is measured in order to have the final dimensions. Such final measurement can be carried out by an operator on board the machine or, by dismounting the workpiece, on an external measurement machine;
- ending machining: irrespective of the method of final measurement, the workpiece is removed from the machine and the process concludes.

Such work method known today for machine tools, although normally used, presents some limitations.

One major limitation is constituted by the fact that the measurement probe, being mounted on the working head of the machine tool proper, is therefore moved using the same axes as the machine, and these axes are controlled with the same position transducers used in the mechanical machining operations.

Therefore the measurement is carried out with respect to the reference system of the machine and not with respect to an absolute reference system; any geometric errors in the machine, and as a consequence any geometric errors in the reference system, will therefore not be detected in this step.

It is however possible to use measurement methods that make it possible to rule out such errors or to measure their effects, for example by rotating the workpiece and using two different axes of the machine to carry out the same measurement.

But in the end, the measurement of the workpiece, carried out in the ways described above, has never been precise and reliable and it still requires direct control from a specialist operator.

From the process it can therefore be seen that the precision of the measurements carried out on board the machine is limited by the technology used to build the machine, insofar as it depends on using the reference system which is relative to the machine itself. Techniques are known which are adapted to limit the extent of the imprecision owing to geometric errors, but they require the direct supervision of an operator and in any case they entail a point of discontinuity in the flow of the work process, for example to reposition the workpiece. From US 5 444 640 is known a numerical control method for controlling a machine tool by correcting thermal displacements having all the method steps defined in the preamble of the attached claim 1.

The aim of the present invention is to provide a work method for a Cartesian machine tool which is capable of improving the known art in one or more of the above mentioned aspects.

Within this aim, an object of the invention is to provide a work method for a Cartesian machine tool which makes it possible to carry out measurements on board the machine the precision of which is not limited by the technology used to build that machine.

Another object of the invention is to provide a work method that makes it possible to take measurements that are precise and reliable without requiring supervision by one or more specially-trained operators.

Another object of the invention is to provide a method that does not entail points of discontinuity in the flow of the work process.

Furthermore, another object of the present invention is to overcome the drawbacks of the known art in a different manner to any existing solutions.

This aim and these and other objects which will become better apparent hereinafter are achieved by a work method for a Cartesian machine tool according to claim 1, optionally provided with one or more of the characteristics of the dependent claims.

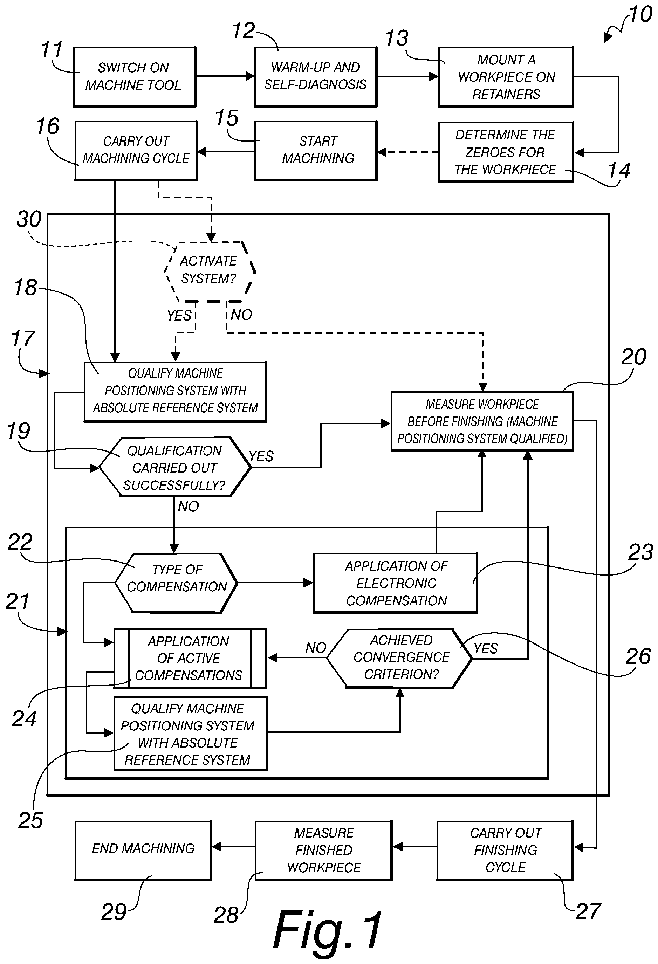

Further characteristics and advantages of the invention will become better apparent from the detailed description that follows of a preferred, but not exclusive, embodiment of the work method for a Cartesian machine tool according to the invention, which is illustrated, by way of non-limiting example, in the accompanying Figure 1, in which such method is shown with a block diagram.

With reference to the figure, the work method for a Cartesian machine tool according to the invention, generally designated by the reference numeral 10, comprises the following steps:
- switching on the machine tool; such step is shown schematically by the block 11 in Figure 1;
- warm-up and self-diagnosis; such operations are configured so that the machine tool carries out a series of operations adapted to bring it up to rated conditions, i.e. to rated operating values, and to check its status; such step is shown schematically by block 12 in Figure 1;
- mounting on retainers of a workpiece, i.e. a workpiece to be machined is installed in the work area of the machine; the mounting on retainers can be done manually or automatically; such step is shown schematically by block 13 in Figure 1;
- once the workpiece is mounted on retainers, determining the zeroes of the workpiece, i.e. inserting a reference point into the numerical control of the machine tool for the subsequent machining operations; such step is shown schematically by block 14 in Figure 1.

The steps described up to here can be omitted if machining and/or re-machining operations are carried out on a workpiece that is already fixed, therefore already mounted on retainers, and/or with the machine already operational, i.e. with the warm-up already carried out;
- starting machining of a workpiece; in this step the machine tool starts any machining cycle, with all the operations specified by the program in use, such as for example millings, roughings, perforations and the like; such step is shown schematically by block 15 in Figure 1.
- carrying out a machining cycle; such step of the process is where the roughing machining effectively occurs, great quantities of material are removed and the machining tolerances are larger than the tolerances specified for the finished workpiece; typically, for a finished workpiece the finishing tolerances are in the order of hundredths of a millimeter, while the roughing tolerances are in the order of tenths of a millimeter; such step also comprises the pre-finishing machining, which makes it possible to have a known quantity of material, the "stock allowance", which must then be detected by the subsequent step of measuring the workpiece prior to finishing; such step is shown schematically by block 16 in Figure 1.

The work method 10 according to the invention has the peculiarity of comprising the following steps, which are shown schematically by block 17 in Figure 1:
- carrying out an operation to check a relative positioning system, on board the machine tool, by way of comparison with a positioning system with absolute reference for calibration; below such operation is referred to with the term "qualification"; this qualification operation serves to check the displacement of the indications of the positioning systems on board the machine, i.e., of the relative reference system, with respect to the positions of an absolute reference system for calibration, such as for example the system described in Italian patent application no. 102015000023588 of 15 June 2015 in the name of HPT SINERGY S.R.L.; such step is shown schematically by block 18 in Figure 1;
- checking the outcome of the qualification operation; such step is shown schematically by block 19 in Figure 1;
- if the qualification operation is passed successfully, i.e. the displacement falls within a preset range of tolerances, then proceed with an operation to measure the workpiece prior to finishing, the latter operation being shown schematically by block 20 in Figure 1;
- if the qualification operation is not passed, then proceed with a compensation step, which comprises one or more compensation operations, which are shown schematically overall by block 21 in Figure 1; such one or more compensation operations are constituted by corrective actions that the machine tool is capable of applying automatically in order to return the displacements that were detected during the qualification step 18 to within the preset tolerances.

The method 10 according to the invention includes for example the following types of compensation: electronic compensations and active compensations.

The compensation step 21 comprises an initial step of selecting the type of compensation operations from either electronic compensations or active compensations; such step is shown schematically by block 22 in Figure 1.

The application of electronic compensations is shown schematically by block 23.

The application of active compensations is shown schematically by block 24.

Electronic compensation means a compensation that is adapted to correct the feedback loop of the numerical control of the machine tool, which is a typically electronic operation.

Such electronic compensation consists of setting up an array, i.e. a table, of independent displacements that makes each axis of the machine describe the correct, i.e. compensated, path using the displacements of the concurrent axes of the machine tool on the basis of the qualification cycle carried out with the absolute reference system for calibration; such electronic compensation has a direct effect on the movement of the axes of the machine tool, therefore, once applied, it is possible to proceed immediately with the measurement of the workpiece.

Such type of compensation has no effect on the actual geometry of the machine, which is not modified.

Active compensations consist of all the mechanical, electro-hydraulic etc. compensations that go to modify the geometry of the machine so as to recover the displacements measured during the qualification cycle.

Such compensations are indirect, in the sense that the correction occurs not through the modification of the path taken by the axes of the machine but through the use of active systems installed on board the machine tool which modify its actual geometry.

It is advisable, after an active compensation step, to qualify the geometry of the machine once again prior to proceeding to measure the workpiece.

Such types of compensation described above, and others which are understood to be similar and equivalent, can be applied in combination.

The method 10 also comprises the following operations:
- if electronic compensations 23 have been carried out, which have a direct effect on the motion of the axes of the machine tool, then proceed with the operation to measure the workpiece prior to finishing, as in block 20;
- if active compensations 24 have been carried out, then execute a further qualification step of the positioning system of the machine tool; such further qualification step is indicated by block 25; such operation corresponds to the one described above, but is executed on the machine tool that has been actively compensated following active compensation operations; such further qualification 25 is carried out in order to be certain that the active compensation step is carried out correctly;
- checking the outcome of the new further qualification operation 25;
- such operation is shown schematically by block 26;
- if the further qualification operation 25 is not passed, i.e., in the event of undercompensation or overcompensation, then proceed with a new active compensation 24;
- carrying out a new further qualification step 25 and a new further active compensation 24, iterating these two operations until a convergence is achieved of the data related to the displacements, i.e. related to the position errors, i.e. these displacement data converge once they are returned to the respective tolerance intervals;
- if the qualification is passed successfully, i.e. the displacement falls within the permitted tolerances, then proceed with the operation to measure the workpiece prior to finishing 20.

The operating step of measuring the workpiece 20, prior to machining or prior to finishing, is carried out by using the relative reference system, i.e. controlled axes of the machine tool are still used, but aligned and conveniently calibrated with respect to an absolute reference system.

The measurement of the workpiece thus obtained has a very high degree of precision.

The work method according to the invention 10 comprises the following final steps:
- carrying out a finishing cycle; on the basis of the measurement carried out in the previous step, the finishing machining operations to bring the workpiece to the final dimensions and tolerances are carried out; such step is shown schematically by block 27;
- measuring the finished workpiece; once the machining operations are ended, the workpiece is measured in order to have the final dimensions. Such final measurement can be carried out by an operator on board the machine or, by dismounting the workpiece, on an external measurement machine; such step is shown schematically by block 28;
- ending machining; irrespective of the method of final measurement, the workpiece is removed from the machine and the process concludes, a step shown schematically by block 29.

Since the machine tool is compensated, it is left to the discretion of the user whether to use the machine tool again to measure the final dimensions of the finished piece or whether to use an external measurement machine.

The work method according to the invention can comprise a further step of selecting whether or not to use a positioning system with absolute reference for calibration; such step of selecting is shown schematically by the dotted block 30.

If it is decided to use a positioning system with absolute reference for calibration, then proceed from the step of carrying out a machining cycle 16 to the qualification step 18.

If it is decided not to use a positioning system with absolute reference for calibration, then proceed directly from the step of carrying out a machining cycle 16 to the step of measuring the workpiece prior to finishing 20.

Such choice can be defined by the machine operator.

Alternatively, the step of selecting 30 is carried out by an electronic control unit, which has a preset algorithm, for example designed to process data relating to the ambient temperature in order to check whether such ambient temperatures have undergone major variations over a determined time period.

If the cycle comprising the qualification operation 18, checking the qualification 19, and applying any compensations 21 is not activated, then the process proceeds with the measurement prior to finishing 20 and the finishing machining 27.

With the work method 10 according to the invention it is possible to achieve a much greater accuracy of measurement than using the positioning systems of a machine tool alone; such result can be achieved without removing the workpiece from the machine, with considerable saving of time and of complications owing to repositioning of the workpiece; finally, the entire operation can be automated and integrated in the work process.

The integration of a positioning system with absolute reference for calibration in the work process makes it possible to obtain measurements that are precise, reliable, and do not require supervision; the system in fact measures the geometric errors of the machine tool by returning in this manner the relative reference system of the machine to an absolute reference, for example associated with the footing of the machine itself; in this way the dimensions of the workpiece obtained by the measurement probe are purged of errors and/or contributions of the machine.

In practice it has been found that the invention fully achieves the intended aim and objects.

In particular, with the invention a work method for a Cartesian machine tool has been devised that makes it possible to carry out measurements on board the machine the precision of which is not limited by the technology used to build that machine.

What is more, with the invention a work method has been devised that makes it possible to take measurements that are precise and reliable without requiring supervision by one or more specially-trained operators.

Furthermore, with the invention a method has been devised that does not entail points of discontinuity in the flow of the work process, since the precision is achieved without removing the workpiece being machined from the support means to which it is fixed, or modifying its position.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A work method for a Cartesian machine tool, the method comprising the following steps:
- starting machining of a workpiece (15);
- carrying out a machining cycle (16);
- carrying out a qualification operation (18), i.e., an operation to check a relative positioning system, on board the machine tool, by way of comparison with a positioning system with absolute reference for calibration, which is adapted to check the displacement of the indications of the positioning system on board the machine, i.e., of the relative reference system, with respect to the positions of the absolute reference system for calibration;
- checking (19) the outcome of the qualification operation (18);
- if the qualification operation (18) is passed successfully, that is if the displacement of the indications of the positioning system on board the machine with respect to the positions of the absolute reference system fall within a preset range of tolerances, then proceed with an operation to measure the workpiece prior to finishing (20);
- if the qualification (18) is not passed, that is if the displacement of the indications of the positioning system on board the machine with respect to the positions of the absolute reference system do not fall within a preset range of tolerances, then proceed with a compensation step (21), which comprises one or more compensation operations;
- carrying out a finishing cycle (27);
- measuring the finished workpiece (28);
- ending machining (29);
**characterized in that** said compensation operations comprise electronic compensations and active compensations, said electronic compensations being electronic operations adapted to correct a feedback loop of the machine and including
setting up a table of independent displacements that makes each axis of the machine describe the correct path using the displacements of the concurrent axes of the machine tool on the basis of the qualification cycle carried out with the absolute reference system for calibration, said active compensations consisting of mechanical and electro-hydraulic operations that modify the geometry of the machine and are adapted to recover the displacements measured during the qualification operations.

2. The method according to claim 1, **characterized in that** said one or more compensation operations of the compensation step (21) comprise corrective actions that the machine tool is capable of applying automatically in order to return the displacements that were detected during the qualification step (18) within the preset tolerances.

3. The method according to one or more of the preceding claims, **characterized in that** said compensation step (21) comprises an initial step (22) of selecting the type of compensation operations from electronic compensations (23) and active compensations (24).

4. The method according to one or more of the preceding claims, **characterized in that** it comprises the following operations:
- if electronic compensations have been carried out (23), which have a direct effect on the motion of the axes of the machine tool, then proceed with the operation to measure the workpiece prior to finishing (20);
- if active compensations (24) have been carried out, then execute a further - qualification step of the positioning system of the machine tool (25);
- checking (26) the outcome of the new further qualification operation (25);
- if said further qualification operation (25) is not passed, i.e., in the event of undercompensation or overcompensation, then proceed with a new active compensation (24);
- carry out a new further qualification step (25) and a new further active compensation (24), iterating these two operations until a convergence is achieved of the data related to the displacements;
- if the qualification (25) is passed successfully, then proceed with said operation to measure the workpiece prior to finishing (20).

5. The method according to one or more of the preceding claims, **characterized in that** said operating step of measuring the workpiece (20), prior to machining or prior to finishing, is carried out by using the relative reference system, which is aligned and calibrated with respect to an absolute reference system.

6. The method according to one or more of the preceding claims, **characterized in that** it comprises the following final steps:
- executing a finishing cycle (27);
- measuring the finished workpiece (28);
- ending machining (29).

7. The method according to one or more of the preceding claims, **characterized in that** it comprises a further step of selecting (30) whether to use or not to use a positioning system with absolute reference for calibration.

8. The method according to claim 7, **characterized in that** said step of selecting (30) entails:
- if it is decided to use a positioning system with absolute reference for calibration, then proceed from the step of carrying out a machining cycle (16) to the qualification step (18);
- if it is decided not to use a positioning system with absolute reference for calibration, then proceed directly from the step of carrying out a machining cycle (16) to the step of measuring the workpiece prior to finishing (20).

9. The method according to claim 7, **characterized in that** said step of selecting (30) is carried out by an electronic control unit.

## Patentansprüche

1. Arbeitsverfahren für eine kartesische Werkzeugmaschine, wobei das Verfahren die folgenden Schritte umfasst:
- beginn der Bearbeitung eines Werkstücks (15);
- ausführen eines Bearbeitungszyklus (16);
- durchführen eines Qualifizierungsvorgangs (18), d. h. eines Vorgangs zur Überprüfung eines relativen Positionierungssystems an Bord der Werkzeugmaschine durch Vergleich mit einem Positionierungssystem mit absoluter Referenz zur Kalibrierung, das zur Überprüfung der Verschiebung der Angaben des Positionierungssystems an Bord der Maschine, d. h. des relativen Bezugssystems, in Bezug auf die Positionen des absoluten Bezugssystems für die Kalibrierung geeignet ist;
- prüfen (19) des Ergebnisses der Qualifizierungsoperation (18);
- wenn der Qualifizierungsvorgang (18) erfolgreich bestanden ist, das heißt, wenn die Verschiebung der Anzeigen des Positionierungssystems an Bord der Maschine in Bezug auf die Positionen des absoluten Bezugssystems innerhalb eines voreingestellten Toleranzbereichs liegen, dann mit einem Vorgang zum Messen des Werkstücks vor der Endbearbeitung (20) fortfahren;
- wenn die Qualifikation (18) nicht bestanden wird, das heißt, wenn die Verschiebung der Anzeigen des Positionierungssystems an Bord der Maschine in Bezug auf die Positionen des absoluten Bezugssystems nicht innerhalb eines voreingestellten Toleranzbereichs liegen, dann mit einen Kompensationsschritt (21) weiter fortfahren, der eine oder mehrere Kompensationsoperationen umfasst;
- ausführen eines Endbearbeitungszyklus (27);
- messen des fertigen Werkstücks (28);
- endbearbeitung (29);
**dadurch gekennzeichnet, dass** die Kompensationsoperationen elektronische Kompensationen und aktive Kompensationen umfassen, wobei die elektronischen Kompensationen elektronische Operationen sind, die angepasst sind, um eine Rückkopplungsschleife der Maschine zu korrigieren, und Erstellen einer Tabelle unabhängiger Verschiebungen umfassen, die jede Achse der Maschine veranlasst, den korrekten Weg zu beschreiben, indem die Verschiebungen der konkurrierenden Achsen der Werkzeugmaschine auf der Grundlage des mit dem absoluten Referenzsystem für die Kalibrierung durchgeführten Qualifizierungszyklus verwendet werden, wobei die aktiven Kompensationen von mechanischen und elektrohydraulischen Operationen bestehen, die die Geometrie der Maschine verändern und angepasst sind, um die während der Qualifizierungsoperationen gemessenen Verschiebungen wiederherzustellen.

2. Verfahren nach Anspruch 1, **dadurch gekennzeichnet, dass** der eine oder die mehreren Kompensationsvorgänge des Kompensationsschritts (21) Korrekturaktionen umfassen, die die Werkzeugmaschine automatisch anwenden kann, um die während des Qualifizierungsschritts (18) erfassten Verschiebungen innerhalb der voreingestellten Toleranzen zurückzugeben.

3. Verfahren nach einem oder mehreren der vorhergehenden Ansprüche, **dadurch gekennzeichnet, dass** der Kompensationsschritt (21) einen Anfangsschritt (22) zum Auswählen der Art der Kompensationsoperationen aus elektronischen Kompensationen (23) und aktiven Kompensationen (24) umfasst.

4. Verfahren nach einem oder mehreren der vorhergehenden Ansprüche, **dadurch gekennzeichnet, dass** es die folgenden Operationen umfasst:
- wenn elektronische Kompensationen durchgeführt wurden (23), die sich direkt auf die Bewegung der Achsen der Werkzeugmaschine auswirken, dann fahre mit dem Vorgang zum Messen des Werkstücks vor der Endbearbeitung (20) fort;
- wenn aktive Kompensationen (24) durchgeführt wurden, dann Ausführen eines weiteren Qualifizierungsschrittes des Positioniersystems der Werkzeugmaschine (25);
- Überprüfen (26) des Ergebnisses der neuen weiteren Qualifizierungsoperation (25);
- wenn die weitere Qualifizierungsoperation (25) nicht bestanden wird, d. h. im Fall einer Unterkompensation oder Überkompensation, dann fahre mit einer neuen aktiven Kompensation (24) fort;
- Ausführen eines neuen weiteren Qualifizierungsschritts (25) und einer neuen weiteren aktiven Kompensation (24), Iterieren dieser beiden Operationen, bis eine Konvergenz der auf die Verschiebungen bezogenen Daten erreicht ist;
- wenn die Qualifizierung (25) erfolgreich bestanden ist, dann fahre mit dem Vorgang fort, um das Werkstück vor der Endbearbeitung zu messen (20).

5. Verfahren nach einem oder mehreren der vorhergehenden Ansprüche, **dadurch gekennzeichnet, dass** der Arbeitsschritt des Messens des Werkstücks (20) vor der Bearbeitung oder vor der Endbearbeitung unter Verwendung des relativen Referenzsystems ausgeführt wird, das damit ausgerichtet und kalibriert in Bezug auf ein absolutes Bezugssystem ist.

6. Verfahren nach einem oder mehreren der vorhergehenden Ansprüche, **dadurch gekennzeichnet, dass** es die folgenden abschließenden Schritte umfasst:
- ausführen eines Endbearbeitungszyklus (27);
- messen des fertigen Werkstücks (28);
- beenden der Bearbeitung (29).

7. Verfahren nach einem oder mehreren der vorhergehenden Ansprüche, **dadurch gekennzeichnet, dass** es einen weiteren Schritt des Auswählens (30) umfasst, ob ein Positionierungssystem mit absoluter Referenz zur Kalibrierung verwendet werden soll, oder nicht.

8. Verfahren nach Anspruch 7, **dadurch gekennzeichnet, dass** der Auswahlschritt (30) umfasst:
- wenn entschieden wird, ein Positioniersystem mit absoluter Referenz für die Kalibrierung zu verwenden, dann vom Schritt der Durchführung eines Bearbeitungszyklus (16) zum Qualifizierungsschritt (18) übergehen;
- wenn entschieden wird, kein Positioniersystem mit absoluter Referenz für die Kalibrierung zu verwenden, dann direkt vom Schritt der Durchführung eines Bearbeitungszyklus (16) zum Schritt der Messung des Werkstücks vor der Endbearbeitung (20) übergehen.

9. Verfahren nach Anspruch 7, **dadurch gekennzeichnet, dass** der Auswahlschritt (30) durch eine elektronische Steuereinheit ausgeführt wird.

## Revendications

1. Procédé de travail pour une machine-outil cartésienne, le procédé comprenant les étapes suivantes:
- commencer l'usinage d'une pièce (15);
- réalisation d'un cycle d'usinage (16);
- effectuer une opération de qualification (18), c'est-à-dire une opération de contrôle d'un système de positionnement relatif, embarqué sur la machine-outil, par comparaison avec un système de positionnement à référence absolue pour l'étalonnage, qui est adapté pour contrôler le déplacement de la indications du système de positionnement à bord de la machine, c'est-à-dire du système de référence relatif, par rapport aux positions du système de référence absolu pour l'étalonnage;
- vérifier (19) le résultat de l'opération de qualification (18);
- si l'opération de qualification (18) est réussie, c'est-à-dire si le décalage des indications du système de positionnement embarqué sur la machine par rapport aux positions du repère absolu rentre dans une plage de tolérances prédéfinie, alors procéder à une opération de mesure de la pièce avant finition (20);
- si la qualification (18) n'est pas réussie, c'est-à-dire si le décalage des indications du système de positionnement embarqué sur la machine par rapport aux positions du repère absolu n'entre pas dans une plage de tolérances prédéfinie, alors procéder à une étape de compensation (21), qui comprend une ou plusieurs opérations de compensation;
- effectuer un cycle de finition (27) ;
- mesurer la pièce finie (28);
- usinage de finition (29);
**caractérisé en ce que** lesdites opérations de compensation comprennent des compensations électroniques et des compensations actives, lesdites compensations électroniques étant des opérations électroniques adaptées pour corriger une boucle de rétroaction de la machine et comportant établir une table de déplacements indépendants faisant décrire à chaque axe de la machine la trajectoire correcte à partir des déplacements des axes concourants de la machine-outil sur la base du cycle de qualification effectué avec le référentiel absolu d'étalonnage, lesdites compensations actives consistant d'opérations mécaniques et électro-hydrauliques qui modifient la géométrie de la machine et sont adaptées pour récupérer les déplacements mesurés lors des opérations de qualification.

2. Procédé selon la revendication 1, **caractérisé en ce que** lesdites une ou plusieurs opérations de compensation de l'étape de compensation (21) comprennent des actions correctives que la machine-outil est capable d'appliquer automatiquement afin de restituer les déplacements qui ont été détectés lors de l'étape de qualification (18) dans les tolérances prédéfinies.

3. Procédé selon une ou plusieurs des revendications précédentes, **caractérisé en ce que** ladite étape de compensation (21) comprend une étape initiale (22) de sélection du type d'opérations de compensation parmi les compensations électroniques (23) et les compensations actives (24).

4. Procédé selon une ou plusieurs des revendications précédentes, **caractérisé en ce qu'**il comprend les opérations suivantes:
- si des compensations électroniques ont été effectuées (23), qui ont un effet direct sur le mouvement des axes de la machine-outil, alors procéder à l'opération de mesure de la pièce avant finition (20);
- si des compensations actives (24) ont été effectuées, alors exécuter une nouvelle étape de qualification du système de positionnement de la machine-outil (25);
- vérifier (26) le résultat de la nouvelle opération de qualification complémentaire (25);
- si ladite autre opération de qualification (25) n'est pas réussie, c'est-à-dire en cas de sous-compensation ou de surcompensation, alors procéder à une nouvelle compensation active (24);
- effectuer une nouvelle étape supplémentaire de qualification (25) et une nouvelle étape de compensation active (24), en itérant ces deux opérations jusqu'à obtenir une convergence des données liées aux déplacements ;
- si la qualification (25) est réussie, procéder à ladite opération de mesure de la pièce avant finition (20).

5. Procédé selon l'une ou plusieurs des revendications précédentes, **caractérisé en ce que** ladite étape opérationnelle de mesure de la pièce (20), avant l'usinage ou avant la finition, est effectuée en utilisant le système de référence relatif, qui est aligné et calibré avec par rapport à un système de référence absolu.

6. Procédé selon une ou plusieurs des revendications précédentes, **caractérisé en ce qu'**il comprend les étapes finales suivantes :
- exécuter un cycle de finition (27);
- mesurer la pièce finie (28);
- usinage de finition (29).

7. Procédé selon une ou plusieurs des revendications précédentes, **caractérisé en ce qu'**il comprend une étape supplémentaire consistant à sélectionner (30) s'il faut utiliser ou non un système de positionnement avec une référence absolue pour l'étalonnage.

8. Procédé selon la revendication 7, **caractérisé en ce que** ladite étape de sélection (30) implique :
- s'il est décidé d'utiliser un système de positionnement à référence absolue pour l'étalonnage, alors passer de l'étape de réalisation d'un cycle d'usinage (16) à l'étape de qualification (18) ;
- s'il est décidé de ne pas utiliser de système de positionnement à référence absolue pour l'étalonnage, passer directement de l'étape de réalisation d'un cycle d'usinage (16) à l'étape de mesure de la pièce avant finition (20).

9. Procédé selon la revendication 7, **caractérisé en ce que** ladite étape de sélection (30) est exécutée par une unité de commande électronique.
